# EUROPÄISCHE PATENTSCHRIFT

(11) **EP 3 632 757 B1**
(45) Veröffentlichungstag und Bekanntmachung des Hinweises auf die Patenterteilung: **14.04.2021**
(21) Anmeldenummer: 19204827.0
(22) Anmeldetag: 27.08.2013
(51) Int. Cl.: B60T 8/1761

(54) **VORRICHTUNG, VERFAHREN UND COMPUTERPROGRAMM ZUM ERZEUGEN EINES EINE REGELUNG EINES SCHLUPFES EINES RADES EINES KRAFTFAHRZEUGS BEEINFLUSSENDEN FÜHRUNGSSIGNALS**
DEVICE, METHOD AND COMPUTER PROGRAM FOR PRODUCING A GUIDE SIGNAL INFLUENCING A SLIP OF A WHEEL OF A MOTOR VEHICLE
DISPOSITIF, PROCÉDÉ ET PROGRAMME INFORMATIQUE PERMETTANT DE GÉNÉRER UN SIGNAL DE GUIDAGE INFLUENÇANT UNE RÉGULATION D'UN GLISSEMENT D'UNE ROUE D'UN VÉHICULE AUTOMOBILE

(30) Priorität: 06.09.2012 DE 102012017601
(43) Veröffentlichungstag der Anmeldung: 08.04.2020
(62) Teilanmeldung aus: 13756397.9
(73) Patentinhaber: Volkswagen AG, 38440 Wolfsburg (DE)
(72) Erfinder: Riedel, Stephan, 38448 Wolfsburg (DE); Alm, Stephan, 38112 Braunschweig (DE)

(56) Entgegenhaltungen:
- EP-A2- 0 881 114
- DE-A1- 10 135 192
- US-A1- 2001 025 219

## Beschreibung

Ausführungsbeispiele der vorliegenden Erfindung befassen sich mit einer Vorrichtung zum Erzeugen eines eine Regelung eines Schlupfes eines Rades eines Kraftfahrzeugs beeinflussenden Führungssignals, zur Beeinflussung der Regelung des Schlupfes während der Rekuperation von elektromotorisch angetriebenen Fahrzeugen bzw. von Hybridfahrzeugen

Die Druckschrift EP 0 881 114 A2 schlägt eine Regelung eines Schlupfes eines Rades eines Kraftfahrzeugs vor, in der ein Sollschlupfwert in Abhängigkeit von einer Fahrsituation und einem Lenkwinkel des Rades eingestellt wird.

Dokument DE 10 135 192 A1 schlägt ein Antriebskraftregelungssystem für ein AllradantriebFahrzeug vor, das eine Antriebskraft für ein Rad in Abhängigkeit von einem Lenkwinkel des Rades einstellt.

Zum Senken des Kraftstoffverbrauchs und zur Verbesserung der Umweltverträglichkeit von Kraftfahrzeugen werden eine Vielzahl von Konzepten diskutiert oder bereits umgesetzt, Kraftfahrzeuge zumindest teilweise elektromotorisch anzutreiben. Dabei existieren zum einen Ansätze für einen vollständigen elektromotorischen Antrieb und zum anderen eine Vielzahl von Hybrid-Lösungen, also Lösungen, bei denen ein Brennstoffmotor mit einem Elektromotor gekoppelt wird. Hybrid-Lösungen bzw. Hybridfahrzeuge selbst gibt es in verschiedenen Konstruktionsarten, beispielsweise als Reihen-Hybrid, bei dem ein Verbrennungsmotor die zum Betrieb eines elektromotorischen Antriebs erforderliche Energie erzeugt, wobei der Antrieb selbst lediglich mittels des Elektromotors erfolgt. Beim Parallel-Hybridantrieb arbeiten ein Verbrennungsmotor und ein Elektromotor mit variierenden Leistungsanteilen zusammen, um die Antriebskraft für das Fahrzeug bereitzustellen.

Sämtliche dieser Konzepte ermöglichen prinzipiell eine sogenannte Nutzbremsung bzw. Rekuperation, um die Energieeffizienz weiter zu erhöhen. Während bei einer herkömmlichen Bremsung die kinetische Energie des Fahrzeugs, die diesem durch das Abbremsen entzogen wird, normalerweise als Wärme in den Bremsen oder dem Motor des Fahrzeuges ungenutzt verloren wird, wird während der Nutzbremsung bzw. der Rekuperation die erfasste kinetische Energie durch einen Generator in elektrische Energie umgewandelt und in Form einer gespeicherten Ladung in der Batterie des Fahrzeuges zur späteren Verwendung gespeichert. Diese kann somit später dazu benutzt werden, den Elektromotor zu speisen. Dabei ist es möglich, zur Rekuperation einen separaten mit dem Antriebstrang gekoppelten Generator zu verwenden oder einen Elektromotor, der zum Antrieb verwendet wird, in einem zweiten Betriebsmodus gleichzeitig auch als Rekuperationsvorrichtung, also ähnlich einem Generator zu verwenden.

Die bei Elektrofahrzeugen bzw. Fahrzeugen mit teilweise elektromotorischem Antrieb durch Rekuperation der kinetischen Energie bei Verringerung der Fahrgeschwindigkeit zurückgewonnene elektrische Energie bewirkt an den Rädern bzw. an einem einzelnen Rad, das mit der Rekuperationsvorrichtung verbunden ist, ein Bremsmoment. Dies ist unabhängig davon, ob ein elektrischer Motor als Generator eingesetzt wird oder ob ein separater Generator verwendet wird.

Das entgegen der Rollrichtung der Räder wirkende Bremsmoment kann so hoch werden, dass dadurch das maximal mittels Reibung übertragbare Moment zwischen den Rädern und dem Fahrbahnbelag überschritten wird, was zu einem Blockieren der Räder führen kann. Daher wird die Rekuperation bzw. die durch die Rekuperation zurückgewonnene Energie durch eine Regelung des Rekuperationsmoments nach dem Schlupf der zur Rekuperation genutzten Räder bzw. der angetriebenen Räder begrenzt. Auch der Schlupf an nicht an der Energierückgewinnung beteiligten Rädern wird üblicherweise begrenzt, beispielsweise durch Systeme zur Stabilisierung der Fahrdynamik. Dies gilt auch für Fahrzeuge ohne Rekuperation. Bei Kurvenfahrt kann sonst bei zu hohem Schlupf an den Vorderrädern, insbesondere bei Fahrzeugen mit Frontantrieb, ein starkes Untersteuern die Folge sein, wohingegen bei Fahrzeugen mit Heckantrieb ein Übersteuern die Folge sein kann. Das Auftreten eines solchen Fahrzustandes kann beispielsweise durch einen Regeleingriff am Bremssystem des Fahrzeugs vermieden werden, um ausgewählte Räder des Fahrzeugs gezielt abzubremsen. Diese Regelung erfolgt, wenn ein Sollschlupfwert an einem oder mehreren Rädern überschritten wird. Um eine Beeinträchtigung der Fahrstabilität auszuschließen, kann der Sollschlupfwert bzw. die Sollschlupfschwelle, die den zulässigen Schlupf des Rades angibt, prinzipiell so niedrig gewählt werden, dass eine Kraftschlussüberschreitung zwischen Rad und Fahrbahnbelag auf allen Reibwerten ausgeschlossen ist. Dies könnte zu einer so kleinen Sollschlupfschwelle führen, dass Regeleingriffe bereits in solchen Situationen erfolgen, die dies aus Gründen der Fahrstabilität eigentlich nicht erfordern.

Es besteht somit das Erfordernis, bei Aufrechterhaltung der Fahrstabilität des Fahrzeugs Regeleingriffe zu verringern.

Die Ausführungsbeispiele der vorliegenden Erfindung ermöglichen dies durch eine Vorrichtung zum Erzeugen eines eine Regelung eines Schlupfes eines Rades eines Kraftfahrzeugs beeinflussenden Führungssignals. Diese weist eine Eingangsschnittstelle zum Empfangen eines einen Lenkwinkel der gelenkten Räder des Fahrzeugs repräsentierenden Sensorsignals und eine Steuereinrichtung aufweist und ist ausgebildet, um basierend auf dem Sensorsignal einen Sollschlupfwert bereitzustellen, der einen tolerierbaren Schlupf eines Rades repräsentiert. Die Vorrichtung weist ferner eine Ausgangsschnittstelle auf, die ausgebildet ist, um ein Führungssignal auszugeben, welches die Änderung eines momentanen Sollschlupfwertes einer Schlupfregelung eines Rades auf den Sollschlupfwert bewirkt. Mit anderen Worten wird gemäß den Ausführungsbeispielen der vorliegenden Erfindung der Sollwert für die Schlupfregelung situativ angepasst, d.h. ein momentaner Sollschlupfwert der Schlupfregelung eines Rades wird basierend auf dem von der Steuereinrichtung bereitgestellten Sollschlupfwert geändert. Der bereitgestellte Sollschlupfwert basiert auf einer Evaluierung des Lenkwinkels der gelenkten Räder des Fahrzeugs. Als Schlupfregelung in dem oben genannten Sinn ist dabei eine Regelung zu verstehen, die mittels eines Regelkreises einen Schlupf des Rades regelt.

Durch Ausführungsbeispiele der vorliegenden Erfindung könnte somit zum Beispiel während der Geradeausfahrt ein höherer Sollschlupfwert erlaubt und ein vorzeitiger Regeleingriff möglicherweise verhindert werden. Gleichzeitig kann während einer Kurvenfahrt ein unerwünscht hoher Schlupf vermieden werden.

Gemäß der Erfindung ist das Führungssignal ausgebildet, um eine Änderung des momentanen Sollschlupfwerts einer Schlupfregelung zu bewirken, mittels derer als Regelgröße der Schlupf an dem Rad geregelt wird, wobei zumindest eine Stellgröße der Schlupfregelung ein von einer Rekuperationsvorrichtung, beispielsweise von einem Generator, bewirktes Rekuperationsmoment ist. Das Rekuperationsmoment bewirkt ebenfalls ein Bremsmoment an dem betreffenden Rad.

Somit kann insgesamt das Rekuperationsvermögen in hohem Maße genutzt werden, um eine hohe Energieausbeute zu erzielen. Gleichzeitig kann eine hohe Kurvenstabilität auch im Rekuperationsbetrieb ermöglicht werden, da durch Verwendung des Lenkwinkelsignals bzw. des einen Lenkwinkel der gelenkten Räder repräsentierenden Sensorsignals situativ auf den Fahrzustand des Fahrzeugs reagiert werden kann. Dies wird auf vorteilhafte Art und Weise ermöglicht, ohne dass etwa durch einen komplexen Regelungsalgorithmus einer Fahrdynamikregelung etwaige zusätzliche Bremseingriffe an anderen Rädern durchgeführt werden müssten oder dergleichen. Ein solcher Regeleingriff der Fahrdynamikregelung könnte beispielsweise zu einer Verunsicherung des Fahrers und insgesamt zu einem weniger gewohnten Fahrverhalten des Fahrzeugs führen. Dies kann durch Ausführungsbeispiele der vorliegenden Erfindung vermieden werden.

Gemäß der vorliegenden Erfindung wird also eine bereits existierende Schlupfregelung für das Rekuperationsmoment, die bislang nicht situativ auf den Fahrzustand bzw. die Kurvenfahrt des Fahrzeugs reagierte, auf einfache Art und Weise durch eine Vorrichtung gemäß den Ausführungsbeispielen der vorliegenden Erfindung ergänzt, um die erfindungsgemäßen Vorteile ohne hohe zusätzliche Kosten zu bewirken.

Gemäß einigen Ausführungsbeispielen der vorliegenden Erfindung muss die zusätzliche Funktionalität nicht durch ein zusätzliches Hardware-Bauteil in Form eines Steuergerätes oder dergleichen implementiert werden. Vielmehr umfassen weitere Ausführungsbeispiele der vorliegenden Erfindung auch ein Verfahren zum Erzeugen eines eine Regelung eines Schlupfes eines Rades eines Kraftfahrzeugs beeinflussenden Führungssignals, bei dem zunächst ein einen Lenkwinkel der gelenkten Räder des Fahrzeugs repräsentierendes Sensorsignal bereitgestellt wird. Basierend auf dem Sensorsignal wird ein Sollschlupfwert bereitgestellt, wobei der Sollschlupfwert einen von der Fahrsituation abhängigen tolerierbaren Schlupf des Rades repräsentiert. Durch Bereitstellen eines Führungssignals, das die Änderung eines momentanen Sollschlupfwertes einer Schlupfregelung eines Rades auf den Sollschlupfwert bewirkt, ein herkömmliches zur Schlupfregelung verwendetes Steuergerät weiter verwendet. Dabei kann die zusätzliche Funktionalität auf einer neuen zusätzlichen Hardwarekomponente, wie eine CPU oder dergleichen, ablaufen. Alternativ ist es gemäß weiterer Ausführungsbeispiele auch möglich, durch ein einfaches Software-Update einer bereits existierenden CPU bzw. eines bereits existierenden Steuergerätes die zusätzliche Funktionalität zu implementieren. Daher umfassen Ausführungsbeispiele der vorliegenden Erfindung auch ein Programm mit einem Programmcode zum Durchführen des oben beschriebenen Verfahrens, wenn der Programmcode auf einem Computer, einem Prozessor oder einer programmierbaren Hardwarekomponente abläuft bzw. dort ausgeführt wird.

Gemäß einigen Ausführungsbeispielen der vorliegenden Erfindung ist die Steuereinrichtung ausgebildet, um bei einem Sensorsignal, das zu einem größeren Lenkwinkel korrespondiert, einen kleineren Sollschlupfwert, insbesondere proportional zu dem Kosinus des Lenkwinkels a, bereitzustellen, als bei einem Sensorsignal, das zu einem kleineren Lenkwinkel korrespondiert. Dadurch kann während der Geradeausfahrt eine gute Rekuperationsleistung erzielt werden, während bei einer Kurvenfahrt die Spurstabilität des Fahrzeugs basierend auf einer Kenntnis der Fahrdynamik bzw. der physikalischen Grundlagen derselben bei gleichzeitig optimaler Rekuperationsleistung sichergestellt werden kann, ohne komplexe und störende Regeleingriffe des Fahrstabilitätssystems zu provozieren.

Gemäß einigen Ausführungsbeispielen wird ein Ausführungsbeispiel der Vorrichtung in einem Fahrzeug mit Frontantrieb zur Anwendung gebracht, d.h., die Ausgangsschnittstelle ist ausgebildet, um ein Führungssignal auszugeben, dass die Änderung des momentanen Sollschlupfwertes einer Schlupfregelung eines angetriebenen Vorderrades bewirkt. Bei der Anwendung in einem frontangetriebenen Fahrzeug kann ein Ausführungsbeispiel der vorliegenden Erfindung das gefühlte Fahrverhalten verbessern, da ein leicht erhöhtes Untersteuern eines frontangetriebenen Fahrzeugs vermieden werden kann, wie es ohne ein Ausführungsbeispiel der vorliegenden Erfindung möglicherweise auftreten könnte, wenn die übrigen Systeme zur Regelung der Fahrdynamik vergleichsweise tolerant abgestimmt sind.

Gemäß der vorliegenden Erfindung wird der Sollschlupfwert von der Steuereinrichtung basierend auf dem Sensorsignal, welches einen Lenkwinkel der gelenkten Räder des Fahrzeugs repräsentiert, bestimmt. Das heißt, Ausführungsbeispiele der vorliegenden Erfindung können auf äußerst effiziente Art und Weise unter Verwendung einer einzigen, dem System des Fahrzeugs ohnehin zur Verfügung stehenden Messgröße implementiert werden. Die Information über den momentanen Lenkwinkel kann dabei von dem Sensorsignal auf jedwede erdenkliche Art und Weise übermittelt bzw. bereitgestellt werden, beispielsweise in Form eines analogen Spannungspegels, analog bzw. digital moduliert, beispielsweise pulsweitenmoduliert, oder als digitaler Zahlenwert, der auf einem Bussystem übertragen wird, beispielsweise auf dem CAN-Bus des Fahrzeugs. Gemäß weiteren Ausführungsbeispielen kann die Information über den Lenkwinkel bzw. das Sensorsignal auch drahtlos übermittelt werden, so dass die Eingangsschnittstelle sowohl eine drahtgebundene, optische, elektrische bzw. drahtlose Schnittstelle sein kann.

Dasselbe gilt für das Führungssignal, das prinzipiell auf dieselbe Art und Weise wie das Sensorsignal digital oder analog repräsentiert, sowie auf die obengenannte Art übermittelt bzw. übertragen werden kann. Ebenso kann von der Steuereinrichtung der Sollschlupfwert auf beliebige Art und Weise basierend auf dem Sensorsignal ermittelt werden. Beispielsweise kann dieser durch eine analoge Schaltung aus einem analogen Sensorsignal ermittelt werden oder basierend auf einer digital repräsentierten Zahl oder Größe analytisch berechnet oder durch eine Look-Up- Tabelle ermittelt werden. Ebenso kann der Sollschlupfwert, wie die übrigen Signale analog, digital, oder auf beliebige andere Art und Weise repräsentiert werden.

Gemäß einigen Ausführungsbeispielen der vorliegenden Erfindung umfasst die Vorrichtung ferner den Schlupfregler, mittels dem als Regelgröße der Schlupf an dem Rad auf einem momentanen Sollwert geregelt wird, wobei zumindest eine Stellgröße der Schlupfregelung ein von einer Rekuperationsvorrichtung, insbesondere von einem als Generator betriebenen Antriebsmotor, bewirktes Rekuperationsmoment ist, welches ein Bremsmoment an dem geregelten Rad bewirkt. Das heißt, die Funktionalität der Schlupfregelung und der Adaption an die Fahrsituation des Fahrzeugs kann beispielsweise in einer einzigen Vorrichtung bzw. in einem einzigen Steuergerät kostengünstig implementiert werden.

Nachfolgend werden unter Bezugnahme auf die beigefügten Figuren Ausführungsbeispiele näher beschrieben und erläutert.
- Fig. 1: zeigt ein Ausführungsbeispiel einer Vorrichtung zum Erzeugen eines eine Regelung eines Schlupfes eines Rades eines Kraftfahrzeugs beeinflussenden Führungssignals;
- Fig. 2: zeigt schematisch die Vorrichtung der Fig. 1 in einer Implementierung in einem frontangetriebenen Kraftfahrzeug;
- Fig. 3: zeigt schematisch die Kräfteverhältnisse an den Rädern eines Fahrzeugs bei der Rekuperation bei Geradeausfahrt und bei Kurvenfahrt; und
- Fig. 4: zeigt ein Flussdiagramm eines Ausführungsbeispiels eines Verfahrens zum Erzeugen eines Führungssignals.

Bei der nachfolgenden Beschreibung der beigefügten Figuren, die spezielle Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Die in der vorstehenden Beschreibung, den nachfolgenden Ansprüchen und den beigefügten Figuren offenbarten Merkmalen können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Es wird explizit darauf hingewiesen, dass weitere Ausführungsbeispiele durch die in den nachfolgenden Figuren gezeigten speziellen Implementierungen nicht eingeschränkt werden sollen. Insbesondere soll die Tatsache, dass bestimmte Funktionalitäten in den folgenden Figuren bezüglich spezieller Entitäten, spezifischer Funktionsblöcke oder spezifischer Vorrichtungen beschrieben werden, nicht so ausgelegt werden, dass diese Funktionalitäten in weiteren Ausführungsbeispielen auf dieselbe Art und Weise verteilt sein sollen oder gar müssen. In weiteren Ausführungsbeispielen mögen bestimmte, nachfolgend getrennten Bauteilen oder Einheiten zugeordnete Funktionalitäten in einem einzigen Bauteil bzw. in einem einzigen funktionalen Element zusammengefasst sein oder hierin als in einem einzigen Element vereinte Funktionalitäten können in getrennten funktionalen Einheiten oder durch mehrere separate Bauteile ausgeführt werden.

Ferner wird darauf hingewiesen, dass, wenn ein spezielles Element oder Bauteil als mit einem anderen Element verbunden, mit diesem gekoppelt oder an dieses angebunden bezeichnet wird, damit nicht notwendigerweise gemeint ist, dass dieses unmittelbar und direkt mit dem anderen Bauteil verbunden, gekoppelt oder an dieses angebunden sein soll. Sofern dies gemeint ist, wird darauf explizit hingewiesen, indem beschrieben ist, dass das Element mit dem weiteren Element direkt verbunden, direkt gekoppelt oder direkt an dieses angebunden ist. Dies bedeutet, dass keine dazwischenliegenden, eine indirekte Kopplung bzw. Verbindung oder Anbindung vermittelnde weiteren Elemente vorhanden sind.

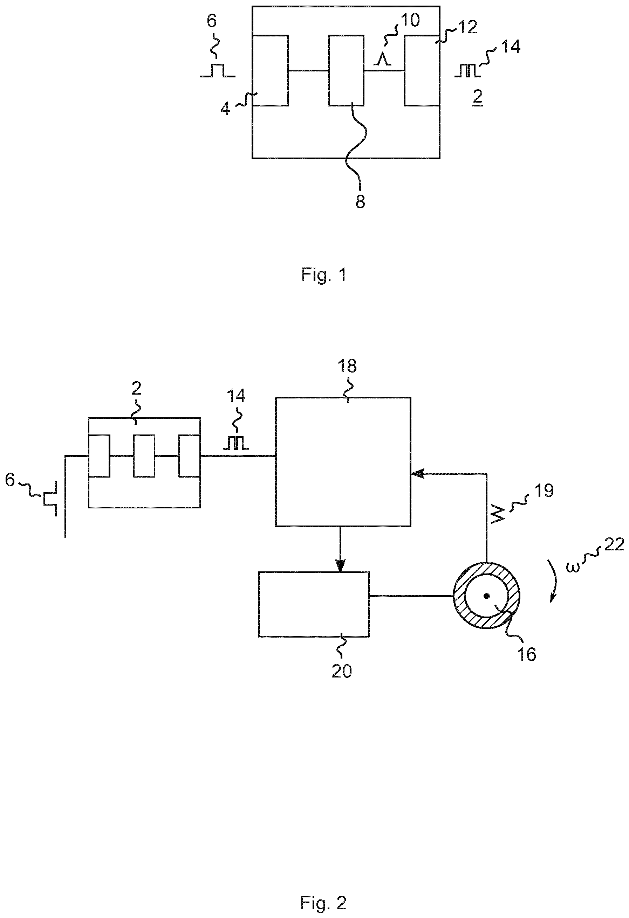

Fig. 1 zeigt schematisch ein Ausführungsbeispiel einer Vorrichtung zum Erzeugen eines Führungssignals 2, das die Regelung eines Schlupfes eines Rades eines Kraftfahrzeugs beeinflussen kann.

Die Vorrichtung 2 weist eine Eingangsschnittstelle 4 auf, mittels derer ein einen Lenkwinkel der gelenkten Räder des Fahrzeugs repräsentierendes Sensorsignal 6 empfangen werden kann. Die Vorrichtung weist ferner eine Steuereinrichtung 8 auf, die ausgebildet ist, um basierend auf dem Sensorsignal 6 einen Sollschlupfwert 10 bereitzustellen, wobei der Sollschlupfwert 10 einen tolerierbaren Schlupf des Rades repräsentiert. Eine Ausgangsschnittstelle 12 der Vorrichtung 2 ist ausgebildet, um ein Führungssignal 14 auszugeben, welches die Änderung eines momentanen Sollschlupfwertes einer Schlupfregelung des Rades auf den Sollschlupfwert 10 bewirkt.

Fig. 2 zeigt zur weiteren Erläuterung der Funktionalität der in Figur 1 dargestellten Vorrichtung 2 die Funktionsweise der Vorrichtung 2 in Verbindung mit den übrigen an der Rekuperation beteiligten und schematisch dargestellten Komponenten eines frontangetriebenen Fahrzeugs. Das heißt, das schematisch dargestellte Rad 16 repräsentiert beispielsweise eines der angetriebenen, in Fahrtrichtung des Fahrzeugs vorne liegenden Räder.

Fig. 2 zeigt ferner einen Schlupfregler 18 mittels dem als Regelgröße der Schlupf an dem Rad 16 auf einen momentanen Sollwert geregelt wird. Zu diesem Zweck wird als zumindest eine Stellgröße von dem Schlupfregler 18 eine Rekuperationsvorrichtung 20, also beispielsweise der als Generator betriebene elektrische Antriebsmotor bzw. ein lediglich zur Rekuperation verwendeter Generator von dem Schlupfregler 18 gesteuert. Dieser ändert das durch die Energierückgewinnung bewirkte Rekuperationsmoment, welches als Bremsmoment an dem Rad 16 wirkt, in Abhängigkeit von einem Steuersignal des Schlupfreglers 18. Der Schlupfregler 18 regelt somit als Regelgröße einen Schlupf an dem Rad 16 auf einen momentanen Sollwert, der in dem Schlupfregler 18 gespeichert sein kann. Als Schlupf in dem hierin verwendeten Sinne soll der Schlupf in Umfangsrichtung, also in Drehrichtung des Rades verstanden werden. Dieser kann beispielsweise als Schlupf S = (ω-ω₀)/ω₀ definiert werden, also als die auf eine Nominaldrehzahl bzw. eine nominelle Winkelgeschwindigkeit ω₀ normierte Differenz der Drehzahl eines angetriebenen Rades ω zu der Nominaldrehzahl eines (hypothetischen) nicht angetriebenen und formschlüssig mitlaufenden Rades ω₀.

Gemäß den Ausführungsbeispielen der vorliegenden Erfindung wird von der Vorrichtung 2 zum Erzeugen eines Führungssignals 14, das eine Regelung eines Schlupfes des Rades 16 beeinflusst bzw. eine Änderung derselben bewirkt, bei Kurvenfahrt, bzw. allgemein gesprochen fahrzustandsadaptiv, ein Sollschlupfwert bestimmt. Dieser basiert auf einer Information über den Lenkwinkel des Fahrzeugs. Die Schlupfregelung bzw. der diese implementierende Schlupfregler 18 wird derart angesteuert, dass dieser den momentanen Sollschlupfwert durch den von der Vorrichtung 2 erzeugten Sollschlupfwert 10 ersetzt.

Mit anderen Worten bezieht sich das in Fig. 2 gezeigte Ausführungsbeispiel der Erfindung auf ein Fahrzeug mit Frontantrieb. Dabei kann sich die Vorrichtung 2 beispielsweise des Signals eines Lenkwinkelsensors bedienen, der an der Lenkstange angebracht ist. Mit dieser Eingangsinformation kann der zulässige Schlupf der Vorderräder (die Sollschlupfschwelle bzw. der Sollschlupfwert) angepasst werden. Durch den Vergleich der momentanen Radschlüpfe der Vorderräder mit dem Sollschlupfwert kann in dem Schlupfregler 18 eine Regelabweichung bestimmt werden. Die momentanen Radschlüpfe der Vorderräder kann der Schlupfregler 18 beispielsweise mittels eines Schlupfsignales 19 mitgeteilt bekommen bzw. aufgrund der momentanen Raddrehzehl ω selbst bestimmen. Diese Regelabweichung kann dazu verwendet werden, das Rekuperationsmoment der Rekuperationsvorrichtung 20 zu regeln. Die Sollschlupfschwelle bzw. der Sollschlupfwert kann über das Führungssignal 14 lenkwinkelabhängig modifiziert werden. Dies kann zu einer hohen Kursstabilität auch bei gefahrenen Kurven mit kleinem Kurvenradius und insgesamt zu einer höheren Gesamtrekuperationsleistung des Fahrzeugs und damit zu einer vergrößerten Reichweite führen.

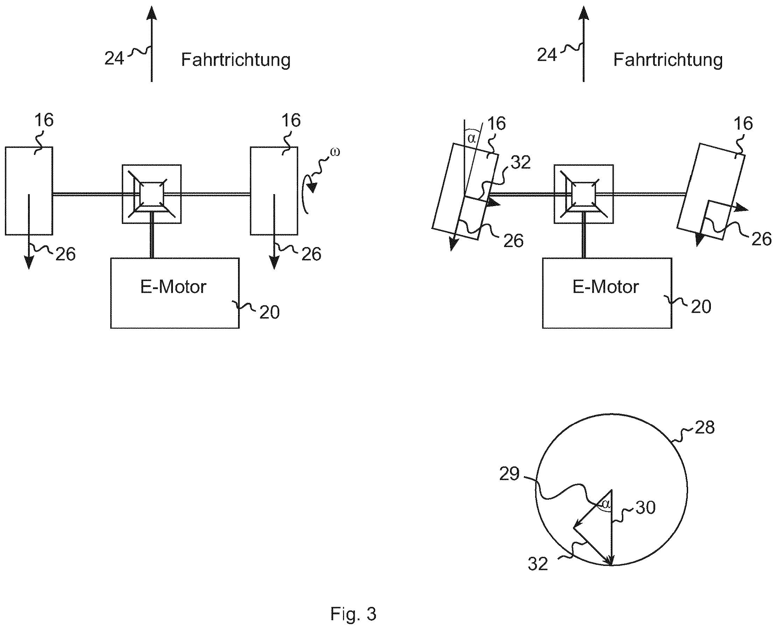

Fig. 3 zeigt zur Verdeutlichung und zum besseren Verständnis schematisch die Situation eines im Rekuperationsbetrieb arbeitenden Fahrzeuges, das sich in einer Fahrtrichtung 24 bewegt. Die Räder 16 sind in diesem Fall die angetriebenen Vorderräder und werden daher von einer Rekuperationsvorrichtung 20 bzw. einem Elektromotor im Fahrbetrieb angetrieben. In der in Fig. 3 dargestellten Situation wird von der Rekuperationsvorrichtung 20 an den Rädern 16 ein entgegen der Fahrtrichtung wirkendes Bremsmoment ausgeübt, das entgegen der Fahrtrichtung 24 wirkt, illustriert durch die Kraftpfeile 26. Genauer gesagt wirkt dieses parallel zur Ausrichtung der Räder entgegen deren Laufrichtung.

In Fig. 3 ist in der unteren Darstellung ein Kammscher Kreis 28 gezeigt, dessen Durchmesser das maximale bei den momentanen Fahrbahneigenschaften bzw. Reibwerten übertragbare Moment bzw. die maximal zwischen Rad 16 und Fahrbahnoberfläche übertagbare Kraft 30 anzeigt. Während diese bei der in Fig. 3 links gezeigten Geradeausfahrt im Prinzip vollständig zur Rekuperation genutzt werden kann, ist dies bei der Kurvenfahrt nur noch teilweise der Fall, ohne zu erhöhtem Schlupf zu führen. Während der Kurvenfahrt wird ein Teil der maximalen Kraft 30 benötigt, um die Fahrstabilität durch die Seitenführungskraft 32 aufrechtzuerhalten, so dass lediglich ein geringerer, vom Kosinus des Lenkwinkels 29 (α) abhängiger Betrag der Maximalkraft 30 zur Rekuperation verwendet werden kann. Dieser Tatsache tragen die Ausführungsbeispiele der vorliegenden Erfindung auf effiziente Art und Weise Rechnung, um hohe Rekuperation bei gleichzeitiger Aufrechterhaltung der Fahrstabilität und verminderten Regeleingriffen zu gewährleisten.

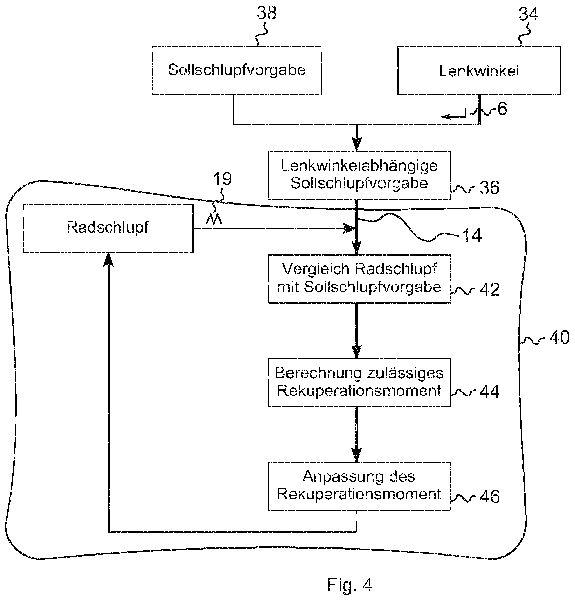

Fig. 4 zeigt schematisch ein Ausführungsbeispiel eines Verfahrens zum Erzeugen eines eine Regelung eines Schlupfes eines Rades 16 eines Kraftfahrzeugs beeinflussenden Führungssignals 14, sowie deren Anwendung auf eine Radschlupfregelung.

In einem Bereitstellungsschritt 34 wird ein einen Lenkwinkel der gelenkten Räder des Fahrzeugs repräsentierendes Sensorsignal 6 bereitgestellt. In einem Bestimmungsschritt 36, wird, basierend auf dem Sensorsignal 6, ein Sollschlupfwert bereitgestellt, der einen tolerierbaren Schlupf des Rades repräsentiert. Daran anschließend wird ein Führungssignal 14 bereitgestellt, das die Änderung eines momentanen Sollschlupfwertes einer Schlupfregelung des Rades auf den Sollschlupfwert bewirkt. In Fig. 4 ist ferner die optionale Möglichkeit gezeigt, eine für Geradeausfahrt dimensionierte Sollschlupfvorgabe 38 vorzunehmen, welche optional bei der Bereitstellung des Sollschlupfwertes S im Schritt 36 berücksichtigt werden kann. Beispielsweise kann die Sollschlupfvorgabe SV lenkwinkelabhängig modifiziert werden, beispielsweise durch Multiplikation mit einem Korrekturfaktor K, d.h. S = K*SV. Der Korrekturfaktor kann beispielsweise den Term cos(α) enthalten bzw. diesem entsprechen, wobei α dem Lenkwinkel entspricht.

Fig. 4 zeigt ferner die optionalen Regelschritte 40 zum Regeln des Schlupfes an dem Rad auf den Sollschlupfwert, wobei als zumindest eine Stellgröße ein von einer Rekuperationsvorrichtung bewirktes Rekuperationsmoment variiert wird. Das heißt, zunächst wird in einem Schritt 42 eine Regelabweichung bestimmt, indem ein momentaner Schlupfwert mit der Sollschlupfvorgabe bzw. dem Sollschlupfwert S, der im Schritt 36 bestimmt wurde, verglichen wird. Daraus kann in einem Schritt der Stellgrößenbestimmung 44 ein zulässiges Rekuperationsmoment berechnet bzw. mittels einer Lookup-Tabelle bestimmt werden. Daraufhin kann die Rekuperationsvorrichtung in einem Steuerschritt 46 derart gesteuert werden, dass diese ihr Rekuperationsmoment wie im Schritt 44 berechnet, ändert. Der sich daraufhin einstellende neue Schlupfwert wird bestimmt und kann beispielsweise mittels eines Schlupfsignales 19 übertragen werden. Der neue Schlupfwert wird als Istwert einem erneuten Sollwert-Istwert Vergleich im Schritt 42 des Bestimmens der Regelabweichung zugrunde gelegt.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (2) zum Erzeugen eines eine Regelung eines Schlupfes eines Rades (16) eines Kraftfahrzeugs beeinflussenden Führungssignals (14), mit folgenden Merkmalen:
• einer Eingangsschnittstelle (4) zum Empfangen eines einen Lenkwinkel (29) der gelenkten Räder des Fahrzeugs repräsentierenden Sensorsignals (6);
• einer Steuereinrichtung (8), die ausgebildet ist, um basierend auf dem Sensorsignal (6) einen Sollschlupfwert (10) bereit zu stellen, wobei der Sollschlupfwert (10) einen tolerierbaren Schlupf des Rades (16) repräsentiert; und
• einer Ausgangsschnittstelle (12), die ausgebildet ist, um ein Führungssignal (14) auszugeben, welches die Änderung eines momentanen Sollschlupfwertes einer Schlupfregelung des Rades (16) auf den Sollschlupfwert (10) bewirkt,
**dadurch gekennzeichnet, dass**
• die Steuereinrichtung (8) ausgebildet ist, um den Sollschlupfwert (10) basierend auf dem Sensorsignal (6) zu verändern;
bei der das Führungssignal (14) ausgebildet ist, um eine Änderung des momentanen Sollschlupfwertes einer Schlupfregelung zu bewirken, mittels derer als Regelgröße der Schlupf an dem Rad (16) geregelt wird, wobei zumindest eine Stellgröße der Schlupfregelung ein von einer Rekuperationsvorrichtung (20) bewirktes Rekuperationsmoment ist, das ein Bremsmoment an dem Rad (16) bewirkt.

2. Vorrichtung (2) nach Anspruch 1, bei der die Steuereinrichtung (8) ausgebildet ist, den Sollschlupfwert (10) kleiner bereit zu stellen wenn der Lenkwinkel (29) größer ist als wenn der Lenkwinkel (29) kleiner ist.

3. Vorrichtung (2) nach einem der vorhergehenden Ansprüche, bei der der Sollschlupfwert proportional zu dem Kosinus des Lenkwinkels (29) ist.

4. Vorrichtung (2) nach einem der vorhergehenden Ansprüche, bei der die Ausgangsschnittstelle (12) ausgebildet ist, um ein Führungssignal (14) auszugeben, das die die Änderung des momentanen Sollschlupfwertes der Schlupfregelung eines angetriebenen Vorderrades bewirkt.

5. Vorrichtung nach einem der vorhergehenden Ansprüche, ferner umfassend:
einen Schlupfregler (18), mittels dem als Regelgröße der Schlupf an dem Rad (16) auf einem momentanen Sollwert geregelt wird, wobei zumindest eine Stellgröße der Schlupfregelung des Schlupfreglers (18) ein von einer Rekuperationsvorrichtung (20) bewirktes Rekuperationsmoment ist, das ein Bremsmoment an dem Rad (16) bewirkt.

6. Kraftfahrzeug mit einer Vorrichtung (2) nach einem der vorhergehenden Ansprüche, das ferner einen als Rekuperationsvorrichtung (20) betreibbaren Elektromotor aufweist, der zumindest zeitweise als Antrieb für die Vorderräder des Kraftfahrzeugs nutzbar ist.

7. Verfahren zum Erzeugen eines eine Regelung eines Schlupfes eines Rades (16) eines Kraftfahrzeugs beeinflussenden Führungssignals (14), umfassend:
• bereitstellen (34) eines einen Lenkwinkel (29) der gelenkten Räder des Fahrzeugs repräsentierenden Sensorsignals (6);
• basierend auf dem Sensorsignal (6), bereitstellen (36) eines Sollschlupfwertes (10), wobei der Sollschlupfwert (10) einen tolerierbaren Schlupf des Rades (16) repräsentiert;
• bereitstellen eines Führungssignals (14), welches die Änderung eines momentanen Sollschlupfwertes einer Schlupfregelung des Rades (16) auf den Sollschlupfwert (10) bewirkt, **gekennzeichnet durch**
• bereitstellen des Sollschlupfwertes (10) basierend auf dem Sensorsignal (6) und
• regeln (40) des Schlupfes an dem Rad (16) auf den Sollschlupfwert (10), wobei als zumindest eine Stellgröße ein von einer Rekuperationsvorrichtung (20) bewirktes Rekuperationsmoment variiert wird, das ein Bremsmoment an dem Rad (16) bewirkt.

8. Verfahren nach Anspruch 7, bei dem der Sollschlupfwert (10) kleiner bereitgestellt wird, wenn der Lenkwinkel (29) größer ist als wenn der Lenkwinkel (29) kleiner ist.

9. Verfahren nach einem der Ansprüche 7 oder 8, wobei der Sollschlupfwert (10) proportional zu dem Kosinus des Lenkwinkels (29) bereitgestellt wird.

10. Verfahren nach einem der Ansprüche 7 bis 9, bei dem das Führungssignal (14) die Änderung des momentanen Sollschlupfwertes einer Schlupfregelung eines angetriebenen Vorderrades bewirkt.

11. Programm mit einem Programmcode zum Durchführen eines der Verfahren gemäß einem der Ansprüche 7 bis 10, wenn der Programmcode auf einem Computer, einem Prozessor oder einer programmierbaren Hardwarekomponente ausgeführt wird.

## Claims

1. Device (2) for generating a guide signal (14), which influences the control of a slip of a wheel (16) of a motor vehicle, comprising the following features:
• an input interface (4) for receiving a sensor signal (6) which represents a steering angle (29) of the steered wheels of the vehicle;
• a control apparatus (8) which is designed to provide a set point slip value (10) on the basis of the sensor signal (6), wherein the set point slip value (10) represents a tolerable slip of the wheel (16);
and
• an output interface (12) which is designed to output a guide signal (14) which brings about the change in an instantaneous set point slip value of a slip control process of the wheel (16) to the set point slip value (10),
**characterized in that**
• the control apparatus (8) is designed to change the set point slip value (10) on the basis of the sensor signal (6);
in which device the guide signal (14) is designed to bring about a change in the instantaneous set point slip value of a slip control process, by means of which change the slip at the wheel (16) is controlled as a control variable, wherein at least one manipulated variable of the slip control process is a recuperation torque which is brought about by a recuperation device (20) and which brings about a braking torque at the wheel (16).

2. Device (2) according to Claim 1, in which the control apparatus (8) is designed to provide a lower set point slip value (10) if the steering angle (29) is higher than when the steering angle (29) is smaller.

3. Device (2) according to one of the preceding claims, in which the set point slip value is proportional to the cosine of the steering angle (29) .

4. Device (2) according to one of the preceding claims, in which the output interface (12) is designed to output a guide signal (14) which brings about the change in the instantaneous set point slip value of the slip control process of a driven front wheel.

5. Device according to one of the preceding claims, also comprising:
a slip control process (18) by means of which the slip at the wheel (16) is adjusted to an instantaneous set point value as a control variable, wherein at least one manipulated variable of the slip control of the slip control process (18) is a recuperation torque which is brought about by a recuperation device (20) and brings about a braking torque at the wheel (16).

6. Motor vehicle having a device (2) according to one of the preceding claims, which motor vehicle also has an electric motor which can be operated as a recuperation device (20) and which can be used at least at certain times as a drive for the front wheels of the motor vehicle.

7. Method for generating a guide signal (14) which influences the control of a slip of a wheel (16) of a motor vehicle, comprising:
• providing (34) a sensor signal (6) which represents a steering angle (29) of the steered wheels of the vehicle;
• providing (36) a set point slip value (10) on the basis of the sensor signal (6), wherein the set point slip value (10) represents a tolerable slip of the wheel (16);
• providing a guide signal (14) which brings about the change in an instantaneous set point slip value of a slip control process of the wheel (16) to the set point slip value (10), **characterized by**
• providing the set point slip value (10) on the basis of the sensor signal (6) and
• adjusting (40) the slip at the wheel (16) to the set point slip value (10), wherein a recuperation torque which is brought about by a recuperation device (20) and which brings about a braking torque at the wheel (16) is varied as at least one manipulated variable.

8. Method according to Claim 7, in which a lower set point slip value (10) is provided if the steering angle (29) is greater than when the steering angle (29) is smaller.

9. Method according to one of Claims 7 and 8, wherein the set point slip value (10) is provided in proportion to the cosine of the steering angle (29) .

10. Method according to one of Claims 7 to 9, in which the guide signal (14) brings about the change in the instantaneous set point slip value of a slip control process of a driven front wheel.

11. Program having a program code for carrying out one of the methods according to one of Claims 7 to 10, when the program code is run on a computer, a processor or a programmable hardware component.

## Revendications

1. Arrangement (2) pour générer un signal pilote (14) qui influence une régulation d'un patinage d'une roue (16) d'un véhicule automobile, comprenant les caractéristiques suivantes :
• une interface d'entrée (4) destinée à recevoir un signal de capteur (6) qui représente un angle de braquage (29) des roues dirigées du véhicule ;
• un dispositif de commande (8), qui est configuré pour fournir une valeur de patinage de consigne (10) en se basant sur le signal de capteur (6), la valeur de patinage de consigne (10) représentant un patinage tolérable de la roue (16) ; et
• une interface de sortie (12), qui est configurée pour délivrer un signal pilote (14), lequel provoque la modification d'une valeur de patinage de consigne momentanée d'une régulation de patinage de la roue (16) à la valeur de patinage de consigne (10),
**caractérisé en ce que**
• le dispositif de commande (8) est configuré pour modifier la valeur de patinage de consigne (10) en se basant sur le signal de capteur (6) :
avec lequel le signal pilote (14) est configuré pour provoquer une modification de la valeur de patinage de consigne momentanée d'une régulation de patinage, au moyen de laquelle est régulé, en tant que grandeur régulée, le patinage au niveau de la roue (16), au moins une grandeur de commande de la régulation de patinage étant un moment de récupération provoqué par un arrangement de récupération (20), lequel provoque un moment de freinage au niveau de la roue (16).

2. Arrangement (2) selon la revendication 1, avec lequel le dispositif de commande (8) est configuré pour fournir la valeur de patinage de consigne (10) plus petite lorsque l'angle de braquage (29) est plus grand que lorsque l'angle de braquage (29) est plus petit.

3. Arrangement (2) selon l'une des revendications précédentes, avec lequel la valeur de patinage de consigne est proportionnelle au cosinus de l'angle de braquage (29) .

4. Arrangement (2) selon l'une des revendications précédentes, avec lequel l'interface de sortie (12) est configurée pour délivrer un signal pilote (14) qui provoque la modification de la valeur de patinage de consigne momentanée de la régulation de patinage d'une roue avant menée.

5. Arrangement selon l'une des revendications précédentes, comprenant en outre :
un régulateur de patinage (18) au moyen duquel le patinage au niveau de la roue (16) est régulé, en tant que grandeur régulée, à une valeur de consigne momentanée, au moins une grandeur de commande de la régulation de patinage du régulateur de patinage (18) étant un moment de récupération provoqué par un arrangement de récupération (20), lequel provoque un moment de freinage au niveau de la roue (16).

6. Véhicule automobile comprenant un arrangement (2) selon l'une des revendications précédentes, qui possède en plus un moteur électrique qui peut fonctionner en tant qu'arrangement de récupération (20), lequel peut être utilisé au moins temporairement en tant que mécanisme d'entraînement pour les roues avant du véhicule automobile.

7. Procédé pour générer un signal pilote (14) qui influence une régulation d'un patinage d'une roue (16) d'un véhicule automobile, comprenant :
• la fourniture (34) d'un signal de capteur (6) qui représente un angle de braquage (29) des roues dirigées du véhicule ;
• en se basant sur le signal de capteur (6), la fourniture (36) d'une valeur de patinage de consigne (10) la valeur de patinage de consigne (10) représentant un patinage tolérable de la roue (16) ;
• la fourniture d'un signal pilote (14), lequel provoque la modification d'une valeur de patinage de consigne momentanée d'une régulation de patinage de la roue (16) à la valeur de patinage de consigne (10), **caractérisé par**
• la fourniture de la valeur de patinage de consigne (10) en se basant sur le signal de capteur (6) et
• la régulation (40) du patinage au niveau de la roue (16) à la valeur de patinage de consigne (10), un moment de récupération provoqué par un arrangement de récupération (20), lequel provoque un moment de freinage au niveau de la roue (16), étant modulé en tant qu'au moins une grandeur de commande.

8. Procédé selon la revendication 7, avec lequel la valeur de patinage de consigne (10) est fournie plus petite lorsque l'angle de braquage (29) est plus grand que lorsque l'angle de braquage (29) est plus petit.

9. Procédé selon l'une des revendications 7 et 8, la valeur de patinage de consigne (10) étant fournie proportionnellement au cosinus de l'angle de braquage (29) .

10. Procédé selon l'une des revendications 7 à 9, le signal pilote (14) provoquant la modification de la valeur de patinage de consigne momentanée d'une régulation de patinage d'une roue avant menée.

11. Programme comprenant un code de programme destiné à mettre en œuvre un procédé selon l'une des revendications 7 à 10 lorsque le programme est exécuté sur un ordinateur, un processeur ou un composant matériel programmable.
